# EUROPÄISCHE PATENTANMELDUNG

(11) **EP 3 662 993 A1**
(43) Veröffentlichungstag der Anmeldung: **10.06.2020**
(21) Anmeldenummer: 18210061.0
(22) Anmeldetag: 04.12.2018
(51) Int. Cl.: B01J 19/00, G01N 31/10, G01N 1/22, G01N 1/26

(54) **AUTOMATISIERTE PROBENAHME BEI EINER PARALLELISIERTEN KATALYSATORTESTANLAGE**

(71) Anmelder: Evonik Operations GmbH, 45128 Essen (DE)
(72) Erfinder: KLASOVSKY, Florian, 63322 Rödermark-Ober Roden (DE); FRANKE, Robert, 45772 Marl (DE); ZANTHOFF, Horst-Werner, 45481 Mülheim a.d. Ruhr (DE); BROCKSIEN, Frank, 48249 Dülmen (DE); BECKER, Marc, 36695 Mobile, AL (US); RÜHL, Jana, 45770 Marl (DE); WIMMER, Tobias, 45768 Marl (DE); MACKOWIAK, Dirk, 46325 Borken (DE); JANSSEN, Ingo, 45768 Marl (DE); HÄMING, Stephan, 45711 Datteln (DE); BACHTIN, Artjom, 48249 Dülmen (DE); MAYER, Andreas, 44651 Herne (DE); HOMANN, Michael, 45721 Haltern am See (DE); MRUGALLA, Clemens, 46348 Raesfeld (DE); NAGEL, Andreas, 46348 Raesfeld (DE); BILKE, Stefanie, 45721 Haltern am See (DE); LI, Jinwei, 45128 Essen (DE); REINSDORF, Arne, 64283 Darmstadt (DE)
(74) Vertreter: Evonik Patent Association

(57) **Zusammenfassung**

Die vorliegende Erfindung betrifft eine Vorrichtung zur Testung heterogener Katalysatoren in Gas/Flüssig-Reaktionen oder in Flüssig-Reaktionen, bei denen Gase entstehen, mit einer Vielzahl von Reaktoren und einer der Anzahl der Reaktoren entsprechenden Anzahl an Austrittskanülen und Abgaskanülen.

## Beschreibung

Optimierte Katalyse ist der Schlüssel zu einer ressourcenschonenden Produktion von Chemikalien. Aus diesem Grunde steht die Entwicklung von effizienten Katalysatoren im Fokus der industriellen chemischen Forschung.

Ein Katalysator ist ein Stoff, der eine chemische Reaktion beschleunigt, ohne in der Reaktion verbraucht zu werden. Eine Alterung des Katalysators (Desaktivierung) ist in diesem Zusammenhang nicht als Verbrauch in der Reaktion zu verstehen.

Es werden grob heterogene und homogene Katalysatoren unterschieden: Bei der heterogenen Katalyse liegt der Katalysator in einem anderen Aggregatszustand vor als die Reaktionsteilnehmer. Ein typischer Fall ist ein fester Katalysator, der eine Reaktion katalysiert, die in der Gasphase erfolgt. Homogene Katalysatoren liegen in derselben Phase vor wie die Reaktionsteilnehmer, sie sind beispielsweise zusammen in einem Lösungsmittel gelöst.

Vorliegend werden Reaktionssysteme betrachtet, bei der die Reaktion in Anwesenheit mindestens einer flüssigen Phase und mindestens einer gasförmigen Phase erfolgt, und wobei der Katalysator in einer weiteren Phase vorliegt, die sich von den beiden Phasen der Reaktionsteilnehmer unterscheidet. Es handelt sich mithin um heterogene Katalyse von Gas/Flüssigphasen-Reaktionen.

Da sich bereits minimale Veränderungen der chemischen und physikalischen Eigenschaften eines Katalysators signifikant auf dessen Leistungsfähigkeit auswirken können, gilt es im Rahmen der Katalysatorentwicklung eine Vielzahl von (manchmal nur minimal) unterschiedlichen Kandidaten hinsichtlich ihrer katalytischen Eigenschaften in der zur Rede stehenden Reaktion zu testen. Die Testung erfolgt mitunter über lange Zeiträume hinweg, da nicht nur die rasch zu bestimmende Wirkung eines Katalysators von Bedeutung ist, wie zum Beispiel die Selektivität einer katalysierten Reaktion, sondern auch sein langfristiges Alterungsverhalten von wirtschaftlicher Bedeutung ist.

Katalysatortestanlagen mit einer Vielzahl parallel geschalteter Reaktoren, in denen eine der Anzahl der Reaktoren entsprechende Anzahl an unterschiedlichen Katalysatoren gleichzeitig unter für die Reaktion notwendigen Bedingungen getestet werden können, helfen die Laborarbeit zu rationalisieren.

Ein Beispiel für eine solche Katalysatortestanlage ist aus WO2005/063372A2 bekannt.

Soweit mit dieser Anlage heterogene katalysierte Gas/Flüssigphasen-Reaktionen untersucht werden, ist hierfür eine der Anzahl der Reaktoren entsprechende Anzahl an gas/flüssig-Separatoren vorgesehen, in denen die Gasphase von der Flüssigphase des jeweiligen Reaktionsgemisches des zugeordneten Reaktors getrennt wird. Die Separatoren sind zylindrisch und arbeiten nach dem Tauchrohr-Prinzip. Die flüssige Phase wird aus den Separatoren abgezogen und über ein zentrales Mehrwege-Ventil einer Analyseeinrichtung zugeführt. Entweder erfolgt eine unmittelbare Analyse der aus dem Mehrwege-Ventil anströmenden Flüssigphase "online" oder die flüssige Phase wird in Sammelbehältern zwischengelagert und später analysiert.

Prinzip bedingter Nachteil dieses Anlagenkonzepts ist, dass sämtliche zu analysierenden Stoffströme über das Mehrwege-Ventil geleitet werden. Dies hat zur Folge, dass beim Aufschalten der Analyseeinrichtung auf aus einem anderen Reaktor stammenden Fluid ein gewisses Restvolumen aus dem zuvor analysierten Reaktor in die Analyse gelangt. Dies führt entweder zu einer Verschmutzung der Probe durch Produkte des zuvor beprobten Reaktors oder zu Wartezeiten, bis das Mehrwege-Ventil vollständig durch die neue Probe gespült ist. Außerdem können nicht zeitgleich Proben aus mehreren Reaktoren genommen werden.

In Hinblick auf diesen Stand der Technik besteht die Aufgabe der Erfindung darin, eine Vorrichtung zur Testung heterogener Katalysatoren in gas/flüssig-Reaktionen anzugeben, bei denen die Proben der einzelnen Reaktionsprodukte nicht querkonterminiert werden und welche eine raschere Probennahme ermöglicht.

Gelöst wird diese Aufgabe durch eine Vorrichtung nach Anspruch 1.

Gegenstand der Erfindung ist mithin eine Vorrichtung zur Testung heterogener Katalysatoren in Gas/Flüssig-Reaktionen oder in Flüssig-Reaktionen, bei denen Gase entstehen, umfassend eine Vielzahl von Reaktoren, wobei jeder Reaktor eine Aufnahme für zu testenden Katalysator sowie einen Zulauf für Edukte und einen Ablauf für Produkte aufweist; weiter umfassend eine der Anzahl der Reaktoren entsprechenden Anzahl an Austrittskanülen, wobei jede Austrittskanüle genau einem Reaktor und jeder Reaktor genau einer Austrittskanüle zugeordnet ist, und wobei dieser Zuordnung entsprechend der jeweilige Ablauf des jeweiligen Reaktors mit der jeweiligen Austrittskanüle fluidleitend verbunden ist; weiter umfassend eine mindestens der Anzahl der Reaktoren entsprechenden Anzahl an Durchstechflaschen, welche jeweils mit einem durchstechbaren Septum verschlossen sind, wobei jede Durchstechflasche genau einem Reaktor zugeordnet ist; weiter umfassend eine Handhabungseinrichtung, mittels welcher die Austrittskanülen versetzbar sind zwischen einer oder mehrerer Positionen für die Probenahme und minimal einer weiteren Position, beispielsweise einer Parkposition oder einer Reinigungsposition,
wobei die Vorrichtung eine der Anzahl der Reaktoren entsprechenden Anzahl an Abgaskanülen umfasst, wobei jede Abgaskanüle genau einer Austrittskanüle zugeordnet ist und wobei in Probenahmeposition der jeweiligen Austrittskanüle die ihr zugeordnete Abgaskanüle durch das Septum der Durchstechflasche sticht, in welche die jeweilige Austrittskanüle mündet, unter der Maßgabe, dass die eingestochene Spitze der Abgaskanüle oberhalb der eingestochenen Spitze der Austrittskanüle endet und ggf. horizontal versetzt ist, insbesondere um eine Kurzschlußströmung zwischen Austrittskanüle und Abgaskanüle zu verhindern.

In einer weiteren Ausführungsform der vorliegenden Erfindung weist die Vorrichtung eine der Anzahl der Reaktoren entsprechenden Anzahl an Ventilen auf, vorzugsweise zwischen Reaktorausgang und Kanüle positioniert, die den Produktstrom umleiten oder kurzfristig unterbrechen können.
In einer bevorzugten Ausführungsform handelt es sich bei der minimal weiteren Position um eine Parkposition, insbesondere in Gestalt eines Abgangs, welcher mit einem durchstechbaren Septum verschlossen ist.

Eine Grundidee der vorliegenden Erfindung besteht darin, jedem Reaktor eine Durchstechflasche zuzuordnen, in dem die Probe der flüssigen Produkte des jeweiligen Reaktors gesammelt wird. Entsprechend der Erfindung werden diese dedizierten Durchstechflaschen zusätzlich zur Phasentrennung verwendet: Das gesamte Produktgemisch wird in die Durchstechflasche geleitet, aber die Gasphase daraus wieder abgezogen, sodass die flüssige Phase in der Durchstechflasche als Probe verbleibt. Die Durchstechflaschen dienen somit zugleich als gas/flüssig-Separator und als Sammelbehälter für die Probe. Da für jeden Reaktor eine eigene Durchstechflasche vorgesehen ist und jede Durchstechflasche lediglich einem Reaktor zugeordnet ist, werden Querkontaminationen vermieden. Zudem können simultan Proben von allen Reaktoren genommen werden. Darüber hinaus wird durch den Abgasausgang ein sicherheitsrelevanter Druckaufbau in der Durchstechflasche verhindert.

Da das Volumen der Durchstechflaschen begrenzt ist, kann nicht kontinuierlich beprobt werden. Vielmehr wechselt die Anlage zwischen zwei Betriebszuständen, nämlich zwischen Testung und Probenahme. In einigen Anwendungsfällen ist noch ein optionaler Spülvorgang als dritter Betriebszustand von Vorteil. Während der Testung werden sämtliche Reaktionsprodukte verworfen. Während der Probenahme werden die Reaktionsprodukte in die Durchstechflaschen dediziert abgefüllt. Der Wechsel zwischen den Betriebszuständen "Testung" und "Probenahme" erfolgt bei der erfindungsgemäßen Vorrichtung entweder mit Hilfe der Handhabungseinrichtung, welche die mit den Reaktoren verbundenen Austrittskanülen wahlweise in einer Parkposition bzw. einer Probenahmeposition positioniert, oder durch Schalten eines Ventils oder durch eine Kombination von beiden.
Um die abgefüllten Durchstechflaschen zu entnehmen, werden die Austrittskanülen bewegt, bevorzugt in eine Parkposition und verbleiben bevorzugt in der Parkposition im Betriebszustand "Testung". In Probenahmeposition durchstechen die Kanülen die Septen der Durchstechflaschen, sodass in den Durchstechflaschen die flüssige Phasen der beprobten Reaktoren dediziert gesammelt werden, währenddessen die Gasphase über die Abgaskanüle aus den Durchstechflaschen wieder entweicht.

Das Einstechen von Kanülen in Durchstechflaschen zwecks Probenahme ist in der chemischen Labortechnik etablierte Praxis. Als Handhabungseinrichtung können gängige, für die Anwendung angepasste Pipettierroboter, verwendet werden. Die erfindungsgemäße Vorrichtung arbeitet also mit bewährter Technik. Vorzugsweise weist der als Handhabungseinrichtung eingesetzte Roboter zwei lineare Achsen auf, die erste zum Anfahren der Park- und Probenahmeposition und eine zweite parallel zu den Kanülen zum Durchstechen der Septen.

Ein wesentlicher Aspekt der Erfindung ist, dass die Durchstechflaschen nicht nur zum Sammeln der Proben sondern auch zur Trennung der flüssigen von der gasförmigen Phase des Reaktionsgemisches dienen. Aus diesem Grunde werden in die Durchstechflaschen nicht nur die Austrittskanüle zum Abfüllen der Probe, sondern auch eine Abgaskanüle zum Abführen der Gase eingestochen. Um die Phasentrennung zu optimieren, sollten Durchstechflaschen verwendet werden, die jeweils einen Nutzraum mit dem Durchmesser d und der Höhe h aufweisen, wobei das Verhältnis h:d größer ist als 1.5 (Die Durchstechflaschen sind eher schlank als gedrungen).
In Probenahmeposition befinden sich die eingestochenen Spitzen der Austrittskanülen und die eingestochenen Spitzen der Abgaskanüle innerhalb des Nutzraums. Der vertikale Versatz der beiden Spitzen sollte dann zwischen 0.6*h bis 0.8*h betragen.

Das Volumen der Durchstechflaschen liegt insbesondere im Bereich von 1 bis 250 ml, vorzugsweise im Bereich von 5 bis 20 ml. Derartige Durchstechflaschen sind dem Fachmann hinlänglich bekannt und kommerziell erhältlich, beispielsweise bei der Firma Neolab, Heidelberg, Fleischhacker, Schwerte oder LABC Labortechnik, Hennef. Insbesondere bevorzugt werden Durchstechflaschen des Typs G0006 (LABC Labortechnik), ND18, ND20 (Neolab) oder HS-Rollrandflasche N20 (Fleischhacker) verwendet.

Bei den Kanülen handelt es sich um Hohlnadeln, also starre Rohrleitungen, die an ihrem distalen Ende angespitzt sind.

Einfachstenfalls bilden je eine Abgaskanüle und eine Austrittskanüle ein Paar. Ihre Zuordnung ist dann eineindeutig. Es ist aber auch denkbar, zwei Abgaskanülen einer Eintrittskanüle zuzuordnen. Dann müssen aber drei Kanülen in die Durchstechflasche einstechen, was aus Abdichtungsgründen nicht bevorzugt ist.

Einfachstenfalls werden Austrittskanüle und Abgaskanüle mit einem horizontalen Versatz parallel zueinander verlaufend angeordnet. So entstehen zwei Einstechstellen im Septum.

Da die Kanülen hohl sind, ist es auch möglich, Austrittskanüle und Abgaskanüle koaxial (d.h. Parallel ohne horizontalen Versatz, nämlich die eine Kanüle in der anderen) anzuordnen. Dies hat den Vorteil, dass das Septum der Durchstechflasche nur noch an einer Stelle verletzt wird. Die Abdichtung wird dadurch besser.

Grundsätzlich ist es denkbar, die Kanülen einzeln mit der Handhabungseinrichtung zwischen den jeweiligen Positionen zu versetzen. Rationeller ist es jedoch, sämtliche Austrittskanülen und Abgaskanülen unbeweglich zueinander in einem Block zusammenzufassen, sodass alle Austrittskanülen gemeinsam ihre jeweilige Parkposition bzw. ihre jeweilige Probenahmeposition einnehmen. Dieser Block wird dann in seiner Gesamtheit mittels der Handhabungseinrichtung zwischen der gemeinsamen Parkposition und der gemeinsamen Probenahmeposition versetzt. In diesem Fall kommt man mit einem zwei-Achsen-Linearroboter als Handhabungseinrichtung aus. Werden die Kanülen nicht als Block versetzt, müsste die Handhabungseinrichtung die Kanülen einzeln picken. Dafür wäre eine dritte Achse notwendig.

Während des Versetzens der Kanülen ist es denkbar, den Produktstrom ununterbrochen über die Kanülen zu leiten. Dadurch können kleinste Produktmengen austreten, die nicht in der Durchstechflasche oder der Parkposition aufgefangen werden. Ist dies unerwünscht, können erfindungsgemäß eine der Anzahl der Reaktoren entsprechende Anzahl an Ventilen eingesetzt werden, die zwischen Reaktor und Austrittkanüle positioniert werden. Dabei können Zwei- oder Mehrweg-Ventile eingesetzt werden, die den Produktstrom kurzfristig unterbrechen oder umleiten.
In der einfachsten Ausführungsform handelt es sich bei den eingesetzten Ventilen um Zwei-Wege-Ventile, die den Produktstrom unterbrechen. Auf diese Weise wird ein Austreten von Probenmaterial während des Versetzens der Kanülen unterbunden.
In einer weiteren Ausführungsform der vorliegenden Erfindung werden Drei-Wege-Ventile eingesetzt. Auf diese Weise ist es beispielsweise möglich in dem Betriebszustand "Testung" Produktströme der unterschiedlichen Reaktoren zu vereinen und abzuführen, ohne sie über die Parkposition zu leiten. In diesem Fall kann die Parkposition mit Durchstechflaschen bestückt sein, die nur während eines Spülvorganges befüllt werden. In einer weiteren Ausführungsform der vorliegenden Erfindung ist es möglich, Vier-Wege-Ventile einzusetzen. Dies erlaubt den Anschluss von Leitungen zur Zufuhr einer Spülflüssigkeit zur Reinigung der Probenleitung.

Mit der erfindungsgemäßen Vorrichtung werden die flüssigen Reaktionsprodukte der getesteten Katalysatoren nicht kontinuierlich analysiert, sondern punktuell beprobt. Um die Beprobung zu vereinfachen ist es sinnvoll, jedem Reaktor eine Vielzahl von Durchstechflaschen zuzuordnen und jeder Austrittskanüle eine entsprechende Anzahl an Probenahmepositionen zuzuweisen. Auf diese Weise durchsticht jede Austrittskanüle in jeder ihrer jeweiligen Probenahmepositionen das Septum einer anderen Durchstechflasche, wobei jede dieser Durchstechflaschen dem Reaktor zugeordnet ist, dessen Ablauf mit der jeweiligen Austrittskanüle fluidleitend verbunden ist.

Die Durchstechflaschen befinden sich dann in einem Magazin und die einzelnen Positionen innerhalb des Magazins entsprechen dann den unterschiedlichen Probenahmepositionen. Die unterschiedlichen Probenahmepositionen innerhalb des Magazins können ausschließlich mit der Handhabungseinrichtung angefahren werden (unbewegliches Magazin) oder teilweise mit der Handhabungseinrichtung und einer entsprechenden Bewegung des Magazins. Es kommt also nicht darauf an, wie die notwenige Relativbewegung zwischen Magazin und Kanülen realisiert wird.

Das Einlegen von leeren Durchstechflaschen in das Magazin oder die Entnahme der abgefüllten Durchstechflaschen aus dem Magazin zwecks Analyse kann ebenfalls mit der Handhabungseinrichtung erfolgen, sofern diese mit entsprechenden Manipulatoren zum Greifen der Durchstechflaschen versehen ist.

Bei der Probennahme werden die gasförmigen Reaktionsprodukte durch die Abgaskanüle, die oberhalb der eingestochenen Spitze der Austrittskanüle endet, entfernt. Dabei ist es gemäß der vorliegenden Erfindung möglich, die gasförmigen Reaktionsprodukte einer Analyse zu unterwerfen, wobei die Gasströme entweder einzeln oder als Gemisch analysiert werden können. Geeignete Gasanalysemethoden sind dem Fachmann hinlänglich bekannt, beispielsweise spektrometrische, chromatographische oder spektroskopische Methoden. Im Rahmen der vorliegenden Erfindung eignen sich insbesondere Massenspektrometrie, Raman-, oder Infrarot-Spektroskopie oder Gaschromatographie, wobei die Gaschromatographie insbesondere bevorzugt ist.

Die hier beschriebene Vorrichtung eignet sich insbesondere für die Testung heterogener Katalysatoren in Gas/Flüssig-Reaktionen oder in Flüssig-Reaktionen, bei denen Gase entstehen. Darüber hinaus ist der Einsatz in Flüssig/Flüssig-Reaktionen ebenfalls denkbar. Die entsprechende Ausgestaltung der Vorrichtung für die genannten unterschiedlichen Reaktionstypen unterliegt dem fachmännischen Wissen des Fachmanns.

Vorzugsweise weist die Vorrichtung keine anderen Phasentrennapparate auf als die Durchstechflaschen, sodass die Phasentrennung während der Probenahme hauptsächlich, vorzugsweise ausschließlich in der Durchstechflasche erfolgt.

Wenn die Reaktionsdrücke so groß sind, dass die Septen bei eingestochener Kanüle nicht dicht halten, sollten die Abläufe jedes der Reaktoren jeweils mit einem dedizierten Druckhaltungs- bzw. Entspannungsventil versehen werden. Ein geeignetes Ventil ist z. B. aus WO2012178132A1 bekannt. Eine zentralisierte Druckhaltung bzw. Entspannungseinrichtung könnte demgegenüber Querkontamination verursachen und ist daher zu vermeiden.

Kommen neben der Druckhaltung, wie vorab beschrieben, auch noch Zwei- oder Mehrweg-Ventile zum Einsatz, die zumindest während des Versetzens der Kanülen den Produktstrom unterbrechen oder umleiten, werden diese bevorzugt zwischen Druckhaltung und Kanüle eingebaut.

Die Erfindung soll nun anhand von Zeichnungen näher erläutert werden. Hierfür zeigen schematisch:
- Figur 1:: Testung der Katalysatoren mit Stellung der Probenahme-Vorrichtung in Parkposition;
- Figur 2:: Testung der Katalysatoren mit Stellung der Probenahme-Vorrichtung in Probenahmeposition;
- Figur 3:: Abmessungen Durchstechflasche mit eingestochenen Kanülen im Detail;
- Figur 4:: wie Figur 2, zusätzlich mit einem zweiten Satz Durchstechflaschen im Magazin.

In der beispielhaften Beschreibung ist die Zahl der parallelisierten Einheiten (Reaktoren, Kanülen, Durchstechflaschen, etc.) aus Übersichtlichkeitsgründen auf drei gesetzt. Dies ist für die vorliegende Erfindung nicht limitierend.

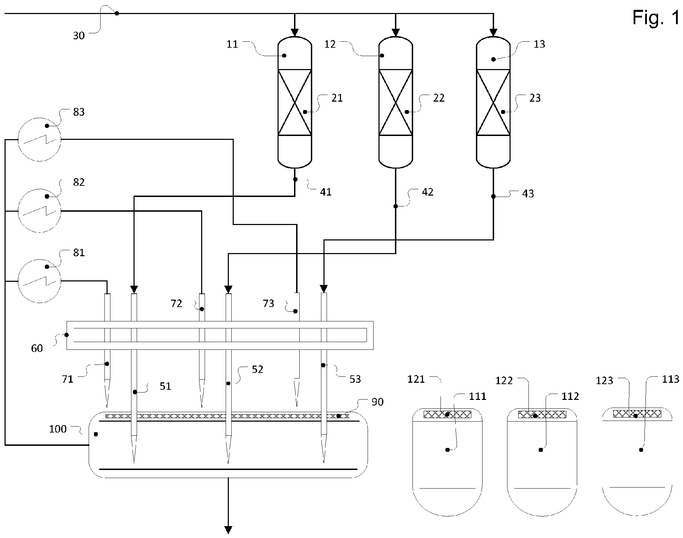

Die schematisch dargestellte Vorrichtung umfasst drei Reaktoren 11, 12, 13. In jedem dieser drei Reaktoren 11, 12, 13 ist jeweils eine zu testende Katalysatorprobe 21, 22, 23 eingebaut. Über einen gemeinsamen Zulauf 30 werden die drei Reaktoren mit Edukt versorgt. Das heißt, alle Katalysatoren 21, 22, 23 werden mit dem gleichen Edukt beaufschlagt. Es ist aber auch denkbar, die Reaktoren mit unterschiedlichem Edukt zu versorgen, etwa um auf derselben Anlage zeitgleich mehrere Reaktionen auszuführen. Dann müssten entsprechend mehrere dedizierte Zuläufe vorgesehen sein. Dies ist in der vereinfachten Form in Figur 1 aber nicht dargestellt.

Die Reaktoren 11, 12, 13 können beheizt oder gekühlt werden und mit einer jeweiligen Druckhaltung versehen sein. Dies alles ist im Interesse der Einfachheit nicht dargestellt. Auch verschiedene geometrische Anordnungen der Reaktoren sind möglich, z.B. um unterschiedliche Temperierungs-Cluster zu erzeugen.

Die zu testenden Katalysatorproben in den Reaktoren 21, 22, 23 können sich unterscheiden und können hinsichtlich ihrer Performanz in den Reaktionen verglichen werden. Die in den Reaktoren entstehenden Produktgemische, verlassen die Reaktoren 11, 12 und 13 über die dedizierten Abläufe 41, 42, 43. Da in den Reaktoren 11, 12, 13 jeweils eine Gas/Flüssigphasen-Reaktion ausgeführt wird, weist das jeweilige Produkt in der Regel auch gasförmige und flüssige Anteile auf.

Die Abläufe 41, 42, 43 sind teilweise über flexible Schlauchleitungen fluidleitend mit Austrittskanülen 51, 52, 53 verbunden. Die Austrittskanülen sind starre, spitze Hohlnadeln, an deren spitzen Ende die Edukte der jeweiligen Reaktoren beständig austreten. Das Edukt vom zweiten Katalysator 22 tritt also aus der zweiten Austrittskanüle 52 aus. Somit besteht eine eineindeutige Zuordnung der Austrittskanülen 51, 52, 53 mit den jeweiligen Reaktoren 11, 12, 13.

Die drei Austrittskanülen sind in einem Block 60 zusammengefasst. Die Austrittskanülen können zueinander unbeweglich oder beweglich sein. In den Block 60 mit eingegliedert sind drei Abgaskanülen 71, 72, 73. Dabei ist jede Abgaskanüle genau einer Austrittskanüle zugeordnet und umgekehrt; in der Zeichnung entsprechend der letzten Ziffer des Bezugszeichens. Somit besteht auch eine eineindeutige Zuordnung der Abgaskanülen 71, 72, 73 mit den jeweiligen Reaktoren 11, 12, 13. Die Abgaskanülen sind als starre spitze Hohlnadeln ausgeführt.

Die Abgaskanülen 71, 72, 73 sind hier beispielhaft über Leitungen jeweils mit einem Gasanalysegerät 81, 82, 83 fluidleitend verbunden. Somit besteht auch eine eineindeutige Zuordnung der Gasanalysegerät 81, 82, 83 mit den jeweiligen Reaktoren 11, 12, 13. Diese Darstellung ist exemplarisch zu verstehen, um den Gang der erhaltenen gasförmigen Produktströme in Richtung der Analyse zu verdeutlichen. In der Praxis wird nicht eine der Anzahl der Reaktoren entsprechende Anzahl an Gasanalysegeräten eingesetzt werden. Vielmehr werden die erhaltenen gasförmigen Produktströme einzeln oder in Form einer Mischung der Analyse zugeführt. Werden gasförmige Produktströme einzeln zugeführt, kann zwischen den Abgaskanülen 71, 72 und 73 ein Mehr-WegeVentilen eingebaut werden, um diese der Reihe nach analysieren zu können.

In dem in Figur 1 dargestellten Parkpositionsbetrieb befinden sich die Austrittskanülen 51, 52, 53 in Parkposition. In dieser durchstechen die Austrittskanülen ein Septum 90 eines Abgangs 100. Über den Abgang 100 werden sämtliche aus den Austrittskanülen 51, 52, 53 austretenden Komponenten gemeinsam undifferenziert gesammelt und entsorgt. Es findet im Testbetrieb also keine Analyse der Edukte statt, die mit den getesteten Katalysatoren 21, 22, 23 erzeugt werden.

Auch die Gasanalysegeräte 81, 82, 83 sind im Parkpositionsbestrieb inaktiv. Ihre Ausläufe sind zwar auf den Abgang 100 vereinigt, es fließt aber kein Gas hindurch.

Das durchstochene Septum 90 dichtet die Austrittskanülen 51, 52, 53 ab, sodass kein Edukt außerhalb des Abgangs 100 austritt. Anstelle eines gemeinsamen Septums 90 für alle Austrittskanülen 51, 52, 53 können auch dedizierte Septen am Abgang 100 vorgesehen sein (nicht dargestellt).

Im Testbetrieb sind drei leere Durchstechflaschen 111, 112, 113 bereitgestellt, jede mit einem eigenen Septum 121, 122, 123 verschlossen.

Jede Durchstechflasche 111, 112, 113 ist eineindeutig einem Reaktor 11, 12, 13 zugeordnet. Die Zuordnung in der Zeichnung entspricht der letzten Ziffer des Bezugszeichens. So ist die erste Durchstechflasche 111 dem ersten Reaktor 11 zugeordnet und umgekehrt.

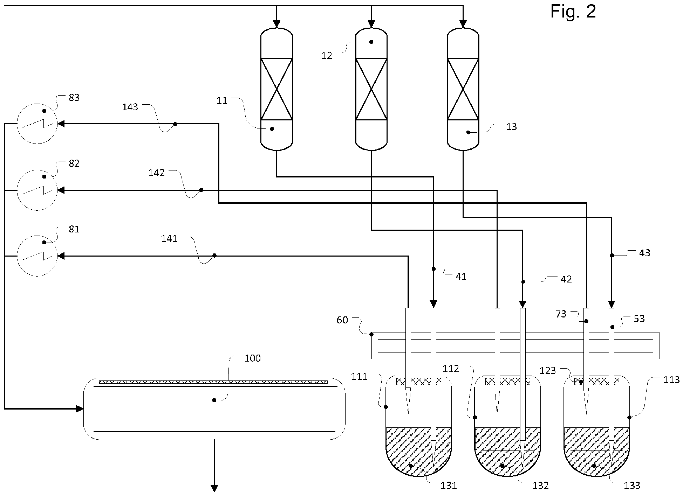

Die Durchstechflaschen 111, 112, 113 werden nur bei der Probenahme genutzt. Dies ist in Figur 2 dargestellt.

Bei der zeitlich begrenzten Probenahme durchstechen die zugeordneten Austrittskanülen 51, 52, 53 und Abgaskanülen 71, 72, 73 die jeweiligen Septen 121, 122, 123 der Durchstechflaschen 111, 112, 113, die den Reaktoren 11, 12, 13 zugeordnet sind, dem auch die Austrittskanülen 51, 52, 53 und Abgaskanülen 71, 72, 73 zugeordnet sind.

So stechen etwa die dritte Austrittskanüle 53 und dritte Abgaskanüle 73 durch das Septum 123 der dritten Durchstechflasche 113, die - wie auch die dritte Austrittskanüle 53 und dritte Abgaskanüle 73 - dem dritten Reaktor 13 zugeordnet ist.

Gemäß der Erfindung findet nun in den Durchstechflaschen 111, 112, 113 eine Phasentrennung der Produktgemische der drei Reaktoren 11, 12, 13 statt: Die flüssigen Anteile der jeweiligen Produkte 131, 132, 133 der Reaktoren 11, 12, 13 werden mithin getrennt in den Durchstechflaschen 111, 112, 113 gesammelt; die gasförmigen Anteile der jeweiligen Produkte 141, 142, 143 der Reaktoren 11, 12, 13 treten durch die jeweiligen Abgaskanülen 71, 72, 73 aus den Durchstechflaschen 111, 112, 113 wieder aus und werden in den jeweiligen Gasanalysegeräten 81, 82, 83 analysiert.

Die gasförmigen Anteile der Produkte 141, 142, 143 werden also dediziert "online" analysiert und danach über den Abgang 100 gemeinsam entsorgt.

Die flüssigen Anteile der Produktgemische 131, 132, 133 verbleiben in den Durchstechflaschen 111, 112, 113. Die Analyse der flüssigen Produkte 131, 132, 133 erfolgt außerhalb der Vorrichtung. Hierfür werden die Durchstechflaschen 111, 112, 113 mit den zu analysierenden flüssigen Proben 131, 132, 133 zu einem Analysegerät verbracht.

Dazu können die einzelnen Durchstechflaschen einzeln entnommen werden und auch einzeln in zum Beispiel einen Probesammler eines Analysegerätes eingeführt werden. Alternativ befinden sich die Durchstechflaschen schon während der Probenahme in Blöcken, die mehrere Durchstechflaschen aufnehmen können - typischerweise 8 bis 64 Flaschen. Dieser Block wird dann als Ganzes in den Autosampler des Analysengerätes eingesetzt.

Die Identifizierung der Durchstechflaschen kann typischerweise über zwei Wege erfolgen. Entweder ist jede einzelne Durchstechflasche markiert, z.B. durch einen Barcode. Alternativ kann auch der Block markiert sein und die Identifikation der einzelnen Probeflasche erfolgt als Kombination der Identifikation des Blockes und der Position des Autosamples bei Probenahme.

Damit die Durchstechflaschen 111, 112, 113 in das Analyselabor überführt werden können, müssen zuvor die Kanülen 51, 52, 53, 71, 72, 73 zuvor in die Parkposition (Entsprechend Figur 1) zurückgefahren und vor unerwünschter Bewegung in eine weitere Probenahmeposition gesichert werden.

Das Verfahren der in dem Block 60 zusammengefassten Kanülen 51, 52, 53, 71, 72, 73 erfolgt mit einer hier nicht dargestellten Handhabungseinrichtung; dabei handelt es sich einfachstenfalls um einen Linearroboter mit zwei Achsen, einer ersten zum rechts/links-Verfahren und eine zweite zum Absenken und Anheben der Kanülen. Der Roboter kann auch zum Entnehmen der Durchstechflaschen 111, 112, 113 zwecks Vorlage in das Analyselabor verwendet werden (nicht dargestellt).

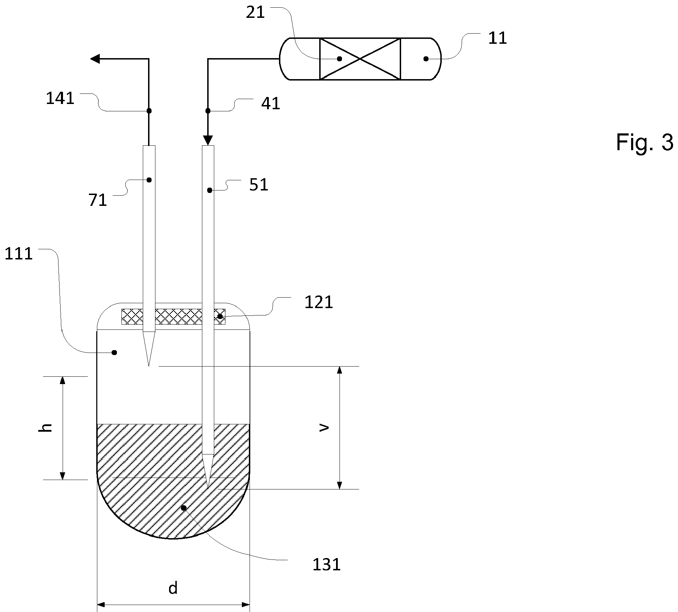

Die Durchstechflaschen werden erfindungsgemäß nicht nur zum Sammeln der Proben sondern auch zur Phasentrennung genutzt. Dies ist in Figur 3 beispielhaft dargestellt.

Die Durchstechflasche (hier repräsentativ die erste Durchstechflasche 111 dargestellt) weist einen zylindrischen Nutzraum N mit dem Durchmesser d und der Höhe h auf, wobei das Verhältnis h:d (Schlankheitsgrad) größer ist als 1.5. Die Durchstechflaschen sind somit vergleichsweise schlank. Die Zeichnungen sind insoweit nicht maßstäblich.

Die der Durchstechflasche 111 zugeordneten Kanülen 51, 71 verlaufen parallel zueinander in einem horizontalen Versatz der kleiner ist als der Durchmesser d. Dieser Abstand darf nicht größer sein als d, da sonst in Probenahmeposition die eingestochene Spitze der Austrittskanüle und die eingestochene Spitze der Abgaskanüle sich nicht innerhalb des Nutzraums N befinden können. Weiterhin sollte der horizontale Versatz größer sein als 11 mm, um eine Dichtigkeit des Septums nach dem Einstechen zu gewährleisten. Es ist auch möglich, beide Kanülen koaxial anzuordnen (nicht dargestellt).

Wichtig ist, dass sich bei Probenahme beide Spitzen innerhalb des Nutzraums befinden und dass ein vertikale Versatz v zwischen den beiden Spitzen herrscht, wobei der vertikale Versatz v zwischen 0.6*h bis 0.8*h beträgt.

Aufgrund des vertikalen Versatzes v kommt es in der Durchstechfalsche 111 bei der Probenahme zu einem Tauchrohreffekt, wobei sich der flüssiger Anteil des Produkts des ersten Reaktors 131 am Boden der Durchstechflasche 111 ansammelt, währenddessen der gasförmige Anteil des Produkts des ersten Reaktors 141 durch die erste Austrittskanüle 71 aus der Durchstechfalsche 111 wieder entweicht. Die Probenahme ist daher zeitlich sehr eng begrenzt, da der Flüssigkeitsspiegel innerhalb der Durchstechflasche nicht so hoch steigen darf, dass die Abgaskanüle 71 in die Flüssigkeit eintaucht. Dann fände keine Phasentrennung mehr statt. Die Dauer der Probenahme ist also letztendlich durch den vertikalen Versatz v und den Volumenstrom des flüssigen Anteils des Produkts des ersten Reaktors 131 limitiert.

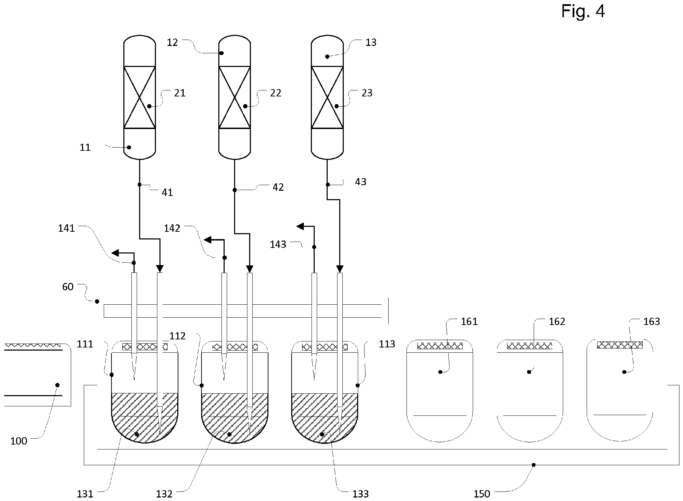

In Figur 4 ist dargestellt, dass die Vorrichtung mit dem einem Magazin 150 ausgerüstet sein kann, welches neben einem ersten Satz Durchstechflaschen 111, 112, 113 noch einen zweiten Satz Durchstechflaschen 161, 162, 163 umfasst. Bei dieser Anordnung ist weiterhin jede Durchstechflasche 111, 112, 113, 161, 162, 163 genau einem der drei Reaktoren 11, 12, 13 zugeordnet; wieder entsprechend der letzten Ziffer der Bezugszeichen. Jedem Reaktor sind aber zwei Durchstechflaschen zugeordnet, z.B. die Durchstechflaschen 111 und 161 dem ersten Reaktor 11. Die Zuordnung ist hier also nicht eineindeutig. Entsprechend der Anzahl der Sätze an Durchstechflaschen im Magazin (hier zwei) gibt es zwei Probenahmepositionen, die mit der Handhabungseinrichtung angefahren werden können. Dementsprechend können vollautomatisch zwei Proben von allen Reaktoren genommen werden. Es ist auch möglich das Magazin 150 gegenüber dem Block 60 zu bewegen, sodass die unterschiedlichen Probenahmepositionen sowohl durch Bewegung des Blocks 60 als auch des Magazins 150 realisiert werden.

Gegenstand der Erfindung ist mithin auch die Verwendung der Vorrichtung zur Testung heterogener Katalysatoren in Gas/Flüssig-Reaktionen oder in Flüssig-Reaktionen, bei denen Gase entstehen, wobei simultan eine Mehrzahl von Katalysatorproben getestet wird, indem jede zu testende Katalysatorprobe einem Reaktor zugeordnet ist, sodass an jeder zu testenden Katalysatorprobe simultan die Reaktion erfolgt, wobei die Produkte der in dem jeweiligen Reaktor erfolgenden Reaktionen in dem Zustand "Probenahme" aus der dem jeweiligen Reaktor zugeordneten Austrittskanüle austritt, in der jeweiligen Durchstechflasche eine Probe der Produkte der Reaktion genommen wird, welche in dem Reaktor erfolgt, welche der Durchstechflasche zugeordnet ist, wobei während der Probenahme innerhalb der Durchstechflasche eine Phasentrennung der Probe dadurch erfolgt, dass die Gasphase der Probe durch die eingestochene Abgaskanüle entweicht und die Flüssigphase der Probe in der Durchstechflasche verbleibt.

Wir vorab ausgeführt, eignet sich die Vorrichtung für die Verwendung in allen dem Fachmann bekannten Gas/Flüssig-Reaktionen oder in Flüssig-Reaktionen, bei denen Gase entstehen, aber auch in reinen Flüssig-Reaktionen.
Beispiele für entsprechende Gas/Flüssig-Reaktionen sind insbesondere Hydrierungen und Oxidationen unter Einsatz entsprechender Gase. Dem Fachmann bekannte Beispiele für Flüssig-Reaktionen, bei denen Gase entstehen sind insbesondere Decarbonylierungen, Oxidationen mit Wasserstoffperoxid, Dehydrierungen oder Spaltungsreaktionen, z.B. die Spaltung von MTBE.

Vorzugsweise wird die Vorrichtung bei Gas/Flüssig-Reaktionen, insbesondere bei Hydrierungen und Oxidationen eingesetzt, wobei Hydrierungen besonders bevorzugt sind.

Entsprechende Hydrierungsverfahren sind dem Fachmann bekannt und erfolgen demgemäß nach an sich bekannten Verfahren, beispielsweise im Temperaturbereich von 150°C bis 200 °C bei einem Druck von 15*105 Pa bis 30*105 Pa an einem Trägerkatalysator, der als aktive Komponenten zumindest Nickel und Kupfer enthält, wie beispielsweise aus EP3037400 bekannt.

Beispielsweise bestehen Hydrierkatalysatoren aus einem Trägermaterial das auf Titandioxid, Zirkondioxid, Aluminiumoxid, Siliziumoxid oder deren Mischoxide basiert, wobei auf diesem Trägermaterial hydrieraktive Metalle, insbesondere zumindest ein Element der Gruppe Kupfer, Kobalt, Nickel, Chrom, Platin, Palladium und Ruthenium aufgebracht sind.

Als Trägervorstufe können Aluminiumoxid, Alumosilikat, Siliziumdioxid, Titandioxid, Zirkondioxid eingesetzt werden. Eine bevorzugte Trägervorstufe ist Aluminiumoxid, insbesondere γ-Aluminiumoxid. Der Katalysator kann eines oder mehrere der hydrieraktiven Metalle enthalten. Vorzugsweise enthält der Katalysator die Metalle Kupfer, Chrom, Nickel, Platin, Palladium und Ruthenium. Besonders bevorzugt enthält der Katalysator als hydrieraktives Metall die Kombination der drei Metalle Kupfer, Chrom und Nickel.

Der Gesamtgehalt an hydrieraktiven Metallen liegt, bezogen auf den reduzierten Katalysator, im Bereich von 1 bis 40 Massen-%, insbesondere im Bereich von 5 bis 25 Massen-%, berechnet als Metall. Für Edelmetalle liegt der Gehalt bei 0,1 - 5%.

Die Katalysatoren werden zweckmäßig in einer Form hergestellt, die bei der Hydrierung einen geringen Strömungswiderstand bietet, wie beispielsweise Tabletten, Zylinder, Strangextrudate oder Ringe. Bei der Herstellung des Katalysators wird üblicherweise das Trägervormaterial in entsprechende Form gebracht. Geformtes Trägervormaterial ist auch kommerziell erhältlich.

In der Regel werden für die Hydrierung Bedingungen eingestellt, bei denen sich die Produkt/Eduktphase hauptsächlich im flüssigen Zustand befindet, beispielsweise in der Flüssigphase in Dreiphasenreaktoren im Gleichstrom, wobei der Wasserstoff in an sich bekannter Weise in dem flüssigen Edukt/Produkt-Strom fein verteilt wird.
Die Hydrierung wird mit Wasserstoff in einem Druckbereich von 5 bis 100 bar, vorzugsweise zwischen 5 und 40 bar, besonders bevorzugt im Bereich von 10 bis 25 bar durchgeführt. Die Hydriertemperaturen liegen zwischen 120 und 220 °C, insbesondere zwischen 140 und 190 °C.

### Bezugszeichenliste

- 11: erster Reaktor
- 12: zweiter Reaktor
- 13: dritter Reaktor
- 21: erste Katalysatorprobe
- 22: zweite Katalysatorprobe
- 23: dritte Katalysatorprobe
- 30: gemeinsamer Zulauf
- 41: erster Ablauf
- 42: zweiter Ablauf
- 43: dritter Ablauf
- 51: erste Austrittskanüle
- 52: zweite Austrittskanüle
- 53: dritte Austrittskanüle
- 60: gemeinsamer Block
- 71: erste Abgaskanüle
- 72: zweite Abgaskanüle
- 73: dritte Abgaskanüle
- 81: erstes Gasanalysegerät
- 82: zweites Gasanalysegerät
- 83: drittes Gasanalysegerät
- 90: gemeinsames Septum des Abgangs
- 100: gemeinsamer Abgang
- 111: erste Durchstechflasche
- 112: zweite Durchstechflasche
- 113: dritte Durchstechflasche
- 121: Septum der ersten Durchstechflasche
- 122: Septum der zweiten Durchstechflasche
- 123: Septum der dritten Durchstechflasche
- 131: flüssiger Anteil des Produkts des ersten Reaktors
- 132: flüssiger Anteil des Produkts des zweiten Reaktors
- 133: flüssiger Anteil des Produkts des dritten Reaktors
- 141: gasförmiger Anteil des Produkts des ersten Reaktors
- 142: gasförmiger Anteil des Produkts des zweiten Reaktors
- 143: gasförmiger Anteil des Produkts des dritten Reaktors
- 150: Magazin
- 161: erste Durchstechflasche (zweiter Satz)
- 162: zweite Durchstechflasche (zweiter Satz)
- 163: dritte Durchstechflasche (zweiter Satz)

- d: Durchmesser
- h: Höhe
- v: vertikaler Versatz

## Patentansprüche

1. Vorrichtung zur Testung heterogener Katalysatoren in Gas/Flüssig-Reaktionen oder in Flüssig-Reaktionen, bei denen Gase entstehen, umfassend eine Vielzahl von Reaktoren, wobei jeder Reaktor eine Aufnahme für zu testenden Katalysator sowie einen Zulauf für Edukte und einen Ablauf für Produkte aufweist; weiter umfassend eine der Anzahl der Reaktoren entsprechenden Anzahl an Austrittskanülen, wobei jede Austrittskanüle genau einem Reaktor und jeder Reaktor genau einer Austrittskanüle zugeordnet ist, und wobei dieser Zuordnung entsprechend der jeweilige Ablauf des jeweiligen Reaktors mit der jeweiligen Austrittskanüle fluidleitend verbunden ist; weiter umfassend eine mindestens der Anzahl der Reaktoren entsprechenden Anzahl an Durchstechflaschen, welche jeweils mit einem durchstechbaren Septum verschlossen sind, wobei jede Durchstechflasche genau einem Reaktor zugeordnet ist; weiter umfassend eine Handhabungseinrichtung, mittels welcher die Austrittskanülen versetzbar sind zwischen einer oder mehrerer Positionen für die Probenahme und minimal einer weiteren Position, wobei die Vorrichtung eine der Anzahl der Reaktoren entsprechenden Anzahl an Abgaskanülen umfasst, wobei jede Abgaskanüle genau einer Austrittskanüle zugeordnet ist und wobei in Probenahmeposition der jeweiligen Austrittskanüle die ihr zugeordnete Abgaskanüle durch das Septum der Durchstechflasche sticht, in welche die jeweilige Austrittskanüle mündet, unter der Maßgabe, dass die eingestochene Spitze der Abgaskanüle oberhalb der eingestochenen Spitze der Austrittskanüle endet.

2. Vorrichtung nach Anspruch 1, **dadurch gekennzeichnet, dass** sie zusätzlich eine der Anzahl der Reaktoren entsprechenden Anzahl an Ventilen aufweist.

3. Vorrichtung nach Anspruch 1, **dadurch gekennzeichnet, dass** es sich bei der minimal weiteren Position um eine Parkposition handelt.

4. Vorrichtung nach Anspruch 1 bis 3, **dadurch gekennzeichnet, dass** die Durchstechflaschen einen Nutzraum mit dem Durchmesser d und der Höhe h aufweisen, wobei das Verhältnis h:d größer ist als 1.5.

5. Vorrichtung nach Anspruch 1 bis 3, **dadurch gekennzeichnet, dass** das Volumen der Durchstechflaschen im Bereich von 1 bis 250 ml liegt.

6. Vorrichtung nach Anspruch 1 bis 5, **dadurch gekennzeichnet, dass** in Probenahmeposition die eingestochene Spitze der Austrittskanüle und die eingestochene Spitze der Abgaskanüle sich innerhalb des Nutzraums befinden, und wobei der vertikale Versatz der beiden Spitzen zwischen 0.6*h bis 0.8*h beträgt.

7. Vorrichtung nach Anspruch 1 bis 6, **dadurch gekennzeichnet, dass** mindestens eine Abgaskanüle sich mit einem horizontalem Versatz parallel zu der ihr zugeordneten Austrittskanüle erstreckt.

8. Vorrichtung nach Anspruch 1 bis 6, **dadurch gekennzeichnet, dass** mindestens eine Abgaskanüle sich koaxial zu der ihr zugeordneten Austrittskanüle erstreckt.

9. Vorrichtung nach Anspruch 1 oder einem der Ansprüche 2 bis 8, **dadurch gekennzeichnet, dass** sämtliche Austrittskanülen und Abgaskanülen unbeweglich zueinander in einem Block zusammengefasst sind, sodass alle Austrittskanülen gemeinsam ihre jeweilige Parkposition bzw. ihre jeweilige Probenahmeposition einnehmen, und dass der Block in seiner Gesamtheit mittels der Handhabungseinrichtung zwischen der gemeinsamen Parkposition und der gemeinsamen Probenahmeposition versetzbar ist.

10. Vorrichtung nach Anspruch 1 oder einem der Ansprüche 2 bis 9, **dadurch gekennzeichnet, dass** jedem Reaktor eine Vielzahl von Durchstechflaschen zugeordnet ist, und dass jeder Austrittskanüle eine entsprechenden Anzahl an Probenahmepositionen zugewiesen ist, dergestalt, dass jede Austrittskanüle in jeder ihrer jeweiligen Probenahmepositionen das Septum einer anderen Durchstechflasche durchsticht, wobei jede dieser Durchstechflaschen dem Reaktor zugeordnet ist, dessen Ablauf mit der jeweiligen Austrittskanüle fluidleitend verbunden ist.

11. Verwendung einer Vorrichtung nach Anspruch 1 oder einem der Ansprüche 2 bis 10 zur Testung heterogener Katalysatoren in Gas/Flüssig-Reaktionen oder in Flüssig-Reaktionen, bei denen Gase entstehen, wobei simultan eine Mehrzahl von Katalysatorproben getestet wird, indem jede zu testende Katalysatorprobe einem Reaktor zugeordnet ist, sodass an jeder zu testenden Katalysatorprobe simultan die Reaktion erfolgt, wobei die Produkte der in dem jeweiligen Reaktor erfolgenden Reaktionen in dem Zustand "Probenahme" aus der dem jeweiligen Reaktor zugeordneten Austrittskanüle austritt, in der jeweiligen Durchstechflasche eine Probe der Produkte der Reaktion genommen wird, welche in dem Reaktor erfolgt, welche der Durchstechflasche zugeordnet ist, wobei während der Probenahme innerhalb der Durchstechflasche eine Phasentrennung der Probe dadurch erfolgt, dass die Gasphase der Probe durch die eingestochene Abgaskanüle entweicht und die Flüssigphase der Probe in der Durchstechflasche verbleibt.

12. Verwendung nach Anspruch 11, **dadurch gekennzeichnet, dass** die Phasentrennung während der Probenahme in der Durchstechflasche erfolgt.
